# EUROPEAN PATENT SPECIFICATION

(11) **EP 3 318 581 B1**
(45) Date of publication and mention of the grant of the patent: **27.10.2021**
(21) Application number: 16817734.3
(22) Date of filing: 15.06.2016
(51) Int. Cl.: C08F 8/22, C08F 210/10, C08F 212/12, C08F 4/16, C08F 297/00, C08F 6/02, C08F 212/08

(54) **METHOD FOR PRODUCING HALOGENATED ISOOLEFIN POLYMER**
VERFAHREN ZUR HERSTELLUNG EINES HALOGENIERTEN ISOOLEFINPOLYMERS
PROCÉDÉ DE PRODUCTION DE POLYMÈRE D'ISOOLÉFINE HALOGÉNÉ

(30) Priority: 01.07.2015 JP 2015133043
(43) Date of publication of application: 09.05.2018
(73) Proprietor: Kaneka Corporation, Osaka-shi, Osaka 530-8288 (JP); Compagnie Générale des Etablissements Michelin, 63000 Clermont-Ferrand (FR)
(72) Inventor: KATO, Yasunaka, Settsu-shi Osaka 566-0072 (JP); IKARI, Yoshihiro, Settsu-shi Osaka 566-0072 (JP)
(74) Representative: Vossius & Partner Patentanwälte Rechtsanwälte mbB
(86) International application number: PCT/JP2016/067822
(87) International publication number: WO 2017/002625

(56) References cited:
- EP-A1- 3 305 822
- EP-A2- 0 344 021
- WO-A1-98/03563
- JP-A- H02 150 408
- JP-A- H05 500 232
- JP-A- 2009 007 383
- JP-A- 2012 111 902
- JP-A- 2013 216 782

## Description

### Technical Field

The present invention relates to a method for producing a halogenated isoolefin-based polymer from an alkylstyrene-containing isoolefin-based polymer polymerized with use of titanium chloride as a polymerization catalyst.

### Background Art

A polymer containing an isoolefin-based monomer as a main component is produced by cationic polymerization. A living cationic polymerization involving use of a Lewis acid catalyst, in particular, is advantageous in that, for example, such a living cationic polymerization allows for (i) control of the molecular weight of a polymer to be produced, (ii) synthesis of a block copolymer, and (iii) synthesis of a telechelic polymer having a functional group at a terminal. Known examples of a Lewis acid catalyst for use in such a polymerization reaction include halogenated metallic compounds such as a halogenated aluminum compound and a halogenated titanium compound.

Such halogenated metallic compounds have extremely high hydrolyzability. Even a very small amount of water will cause such a halogenated metallic compound to be hydrolyzed to produce a metal oxide, with the result of the halogenated metallic compound being incapable of acting as a polymerization catalyst. Polymerization involving use of a halogenated metallic compound as a catalyst thus requires the water concentration in the system to be sufficiently low. The above property of halogenated metallic compounds is, in contrast, utilized at the end of polymerization. A method is disclosed that includes actively adding water (see Patent Literature 1) or an alcohol-based compound (see Patent Literature 2) to hydrolyze a halogenated metallic compound to stop polymerization. Adding water leads to production of a metal oxide as an impurity, whereas adding an alcohol-based compound leads to production of a metal alkoxide as an impurity. These impurities are removed by a method such as centrifugation or filtration.

Regarding application, a polymer (isoolefin-based polymer) containing an isoolefin-based monomer such as isobutylene as a main component has a good gas-barrier property, and is in wide use as a material for various sealing components. Known examples of the polymer include (i) a block copolymer of styrene-b-isobutylene-b-styrene (SIBS), (ii) isobutylene-isoprene polymer, and (iii) isobutylene-isoprene polymer and isobutylene-p-methylstyrene polymer each halogenated with chlorine or bromine.

Patent Literatures 3 and 4 each disclose a method for producing an isobutylene-p-brominated methylstyrene copolymer (halogenated isobutylene polymer). According to each of Patent Literatures 3 and 4, the method includes (i) producing an isobutylene-p-methylstyrene copolymer by a living cationic polymerization involving use of an aluminum-based Lewis acid catalyst and then (ii) causing light or a radical generator to act on the copolymer in the presence of bromine molecules to brominate the p-methyl group for production of an isobutylene-p-brominated methylstyrene copolymer.

A halogenated isobutylene polymer both maintains a good gas-barrier property and has a halogen group, which is a reactive, functional group. This allows halogenated isobutylene polymers, among other isoolefin-based polymers, to find wide application. A p-halogenated methyl group, which is a p-methyl group that has been halogenated, can easily undergo substitution reaction with a nucleophilic reagent in an aprotic polar solvent, and is thus usable to introduce not only a halogen group but also other functional groups into an isoolefin-based polymer. Patent Literature 4, for example, discloses a method of causing an acrylic compound to act on a halogenated isobutylene-p-methylstyrene copolymer to introduce, into the copolymer, an acryloyl group, which is a radically reactive functional group.

As another example, Patent Literature 5 discloses a method for accelerating halogenation of an isoolefin-based polymer, the method including a step of bringing at least one halogen and at least one hydrofluorocarbon into contact with each other.

### Citation list

### [Patent Literature]

[Patent Literature 1]
   Japanese Patent Application Publication, Tokukaihei, No. 9-71611 A (Publication Date: March 18, 1997)
[Patent Literature 2]
   Japanese Patent Application Publication, Tokukai, No. 2004-123886 A (Publication Date: April 22, 2004)
[Patent Literature 3]
   Japanese Patent Application Publication (Translation of PCT Application), Tokuhyouhei, No. 2-150408 (Publication Date: June 8, 1990)
[Patent Literature 4]
   Japanese Patent Application Publication (Translation of PCT Application), Tokuhyou, No. 2002 -534543 (Publication Date: October 15, 2002)
[Patent Literature 5]
   Japanese Patent Application Publication (Translation of PCT Application), Tokuhyou, No. 2009 -522398 (Publication Date: June 11, 2009)

### Summary of Invention

### Technical Problem

Conventional techniques such as the above unfortunately leave room for improvement in terms of halogenating an alkyl group in an isoolefin-based polymer, which alkyl group is derived from alkylstyrene and can be halogenated, at a high proportion even in a case where the isoolefin-based polymer has been polymerized by a living cationic polymerization involving use of titanium chloride as a Lewis acid catalyst.

The present invention has been accomplished in view of the above issue, and serves to provide a method for producing a halogenated isoolefin-based polymer which method allows for halogenating an alkyl group in an isoolefin-based polymer, which alkyl group is derived from alkylstyrene and can be halogenated, at a high proportion even in a case where the isoolefin-based polymer has been polymerized by a living cationic polymerization involving use of titanium chloride as a Lewis acid catalyst.

### Solution to Problem

The inventors of the present invention have discovered that the above object is attainable by causing (i) an alkylstyrene-containing isoolefin-based polymer polymerized by a living cationic polymerization involving use of titanium chloride as a Lewis acid catalyst and (ii) halogen molecules to coexist and irradiating the alkylstyrene-containing isoolefin-based polymer and the halogen molecules with light. The inventors have consequently completed the present invention.

The present invention, in other words, relates to a method for producing a halogenated isoolefin-based polymer, the method including: irradiating an alkylstyrene-containing isoolefin-based polymer with light in presence of a halogen molecule, the alkylstyrene-containing isoolefin-based polymer having been polymerized by a living cationic polymerization involving use of titanium chloride as a Lewis acid catalyst,the alkylstyrene-containing isoolefin-based polymer containing titanium oxide derived from titanium chloride.

Preferable embodiments relate to a method for producing a halogenated isoolefin-based polymer, wherein the alkylstyrene-containing isoolefin-based polymer contains not less than 10 ppm of titanium oxide derived from titanium chloride.

Preferable embodiments relate to a method for producing a halogenated isoolefin-based polymer, wherein the titanium chloride is titanium tetrachloride.

Preferable embodiments relate to a method for producing a halogenated isoolefin-based polymer, wherein the alkylstyrene-containing isoolefin-based polymer is a block copolymer of a polymer block containing an isoolefin-based monomer as a main component and a polymer block containing an aromatic vinyl monomer as a main component.

Preferable embodiments relate to a method for producing a halogenated isoolefin-based polymer, wherein the polymer block containing an isoolefin-based monomer as a main component contains alkylstyrene.

Preferable embodiments relate to a method for producing a halogenated isoolefin-based polymer, wherein the alkylstyrene is contained in an amount within a range of 0.1 weight% to 15 weight% with respect to 100 weight% of the polymer block containing an isoolefin-based monomer as a main component.

Preferable embodiments relate to a method for producing a halogenated isoolefin-based polymer, wherein alkylstyrene contained in the alkylstyrene-containing isoolefin-based polymer is a compound represented by General Formula (1) below,

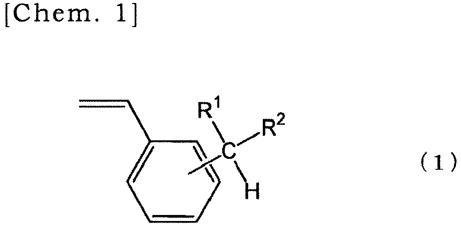

where R¹ and R² are each selected from a hydrogen, a halogen, a monovalent saturated alkyl group having 1 to 5 carbon atoms, and a halogenated alkyl group having 1 to 5 carbon atoms, and R¹ and R² may be identical to or different from each other.

Preferable embodiments relate to a method for producing a halogenated isoolefin-based polymer, wherein the alkylstyrene is p-methylstyrene; and the aromatic vinyl monomer is styrene.

Preferable embodiments relate to a method for producing a halogenated isoolefin-based polymer, wherein the halogen molecule is a bromine molecule.

Preferable embodiments relate to a method for producing a halogenated isoolefin-based polymer, wherein the halogenated isoolefin-based polymer has a weight-average molecular weight within a range of 50,000 to 500,000.

### Advantageous Effects of Invention

The present invention allows for halogenating an alkyl group in an isoolefin-based polymer, which alkyl group is derived from alkylstyrene and can be halogenated, at a high proportion even in a case where the isoolefin-based polymer has been polymerized by a living cationic polymerization involving use of titanium chloride as a Lewis acid catalyst.

### Brief Description of Drawings

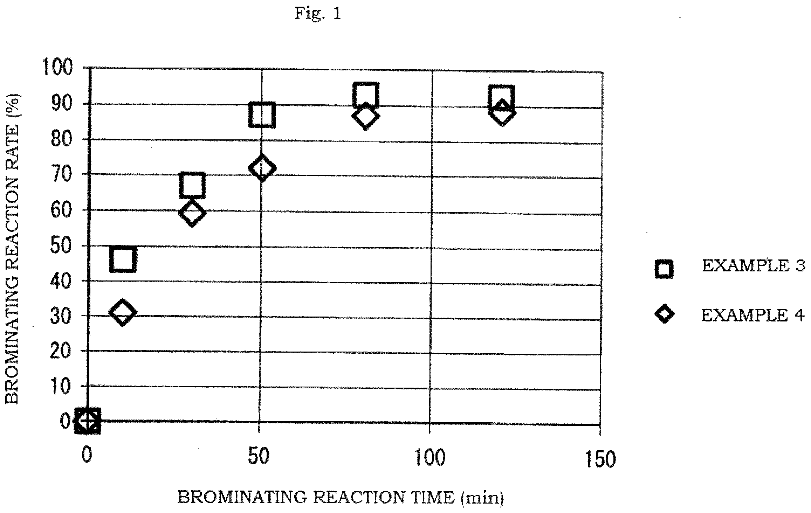

Fig. 1 is a graph showing respective reaction velocities for Examples 3 and 4 of the present invention.

### Description of Embodiments

Embodiments of the present invention will be described below. The present invention is, however, not limited to the embodiments described. Further, any numerical range "A to B" expressed in the present specification means "not less than A and not greater than B" unless otherwise stated.

The present invention relates to a method for producing a halogenated isoolefin-based polymer, the method including: irradiating an alkylstyrene-containing isoolefin-based polymer with light in presence of a halogen molecule, the alkylstyrene-containing isoolefin-based polymer having been polymerized by a living cationic polymerization involving use of titanium chloride as a Lewis acid catalyst,the alkylstyrene-containing isoolefin-based polymer containing titanium oxide derived from titanium chloride. The description below will deal with this in detail.

### <Living cationic polymerization>

The term "living cationic polymerization" as used in the present specification refers to a polymerization reaction free from chain transfer and irreversible termination. This definition is mentioned in, for example, "Koubunshi no Gousei (Jou) Rajikaru Jugou, Kachion Jugou, Anion Jugou" edited by Endo (Kodansha Ltd., 2010).

Typically, carbocations at a growing terminal during a cationic polymerization are unstable, causing frequent side reactions such as chain transfer and termination. A living cationic polymerization system, on the other hand, involves an extremely low concentration of free carbocations, which inhibits the above side reactions. A carbocation concentration can be lowered by, for example, a technique of achieving a reversible equilibrium between (i) an active species (ionic species), in which a carbon radical as a cation is exposed, and (ii) a dormant species (inactive species), in which a carbon radical as a cation is protected (capped) with a covalent bond with another atom. According to this technique, when a catalyst such as a Lewis acid acts on a dormant species having a dissociable covalent bond, a small amount of a cationic growing species (carbocation) forms and reacts with a monomer. The carbocation formed reacts with a plurality of monomer molecules, and then changes back to a capped dormant species. A living cationic polymerization requires (i) a dormant species to form in a far larger amount than an active species and (ii) the change between the active species and the dormant species to be sufficiently rapid.

### <Titanium chloride>

An embodiment of the present invention selects titanium chloride as a Lewis acid catalyst. Titanium chloride is superior to other Lewis acid catalysts in terms of ease of handling and flexibility in production of an isoolefin-based polymer.

Titanium chloride for use in the present invention is a chlorine-containing titanium compound, and is specifically represented by the following General Formula (2):
[Chem. 2]

T i Xₐ (OR) ₄₋ₐ (2)

where X is a chlorine (Cl), the symbol "a" represents a number defined as 0 < a ≤ 4, and R is a saturated alkyl group having 1 to 8 carbon atoms.

The polymerization reaction may involve further use of another Lewis acid catalyst in combination with titanium chloride. Further, titanium chloride may be (i) put into the polymerization reaction system from outside or (ii) formed inside the polymerization reaction system. Among other titanium chlorides, titanium tetrachloride is preferable because it is easily available and has great polymerization activity.

For production of a halogenated isoolefin-based polymer, how halogenation of an isoolefin-based polymer can be accelerated has been a major issue. Patent Literatures 3 to 5 each disclose a method for halogenating an isoolefin-based polymer produced by a living cationic polymerization involving use of a halogenated aluminum compound as a Lewis acid catalyst. A halogenated aluminum compound is, however, extremely reactive and thus needs to be preserved not in the form of a simple substance but as diluted with a solvent, requiring a huge storage tank. A halogenated aluminum compound thus has low flexibility in production of an isoolefin-based polymer and is also not easily available.

A halogenated titanium such as titanium chloride is, on the other hand, easy to obtain and handle. This has led to a demand for replacing conventional Lewis acid catalysts for use in the polymerization reaction with a halogenated titanium, which is preservable in the form of a simple substance and has high flexibility in production of an isoolefin-based polymer.

No case, however, has been reported of halogenating a polymer produced by a living cationic polymerization involving use of a titanium-based Lewis acid catalyst. The inventors of the present invention have discovered the following difficulty through research: A living cationic polymerization involving use of a halogenated titanium as a Lewis acid catalyst forms a solid such as titanium oxide as a result of an inactivation operation at the end of the polymerization, the titanium oxide adversely influencing a subsequent halogenation reaction. This has required an operation such as centrifugation or filtration to be performed before a halogenation reaction to sufficiently remove titanium oxide that could inhibit the halogenation reaction. There may, however, be formed fine particles of titanium oxide as a result of a slight difference in an inactivation condition. Fine particles of titanium oxide are difficult to remove completely, by centrifugation or filtration. There has been, in other words, a concern that removing titanium oxide in the form of fine particles to a level at which the titanium oxide will not inhibit a halogenation reaction unfortunately involves numerous steps.

In view of that, the inventors of the present invention have made it clear as a result of further research that the production method described herein, while it involves use of titanium chloride as a Lewis acid catalyst for a living cationic polymerization, causes an alkylstyrene-containing isoolefin-based polymer to coexist with halogen molecules and irradiates the alkylstyrene-containing isoolefin-based polymer and the halogen molecules with light to allow a halogenation reaction to proceed efficiently. In other words, the production method described herein, while it uses titanium chloride (which is easy to obtain and handle), overcomes the disadvantage of titanium chloride of possibly inhibiting a halogenation reaction and allows the halogenation reaction to proceed efficiently.

### <Titanium oxide>

Titanium chloride is oxidized at the end of the polymerization into titanium oxide, which has lost activity as a Lewis acid catalyst. Such titanium oxide derived from titanium chloride may include titanium atoms that are not entirely oxidized but partially bonded with chlorine atoms as represented by General Formula (3):
[Chem. 3]

T i C l_{b} (OR) _{c}O_{d} (3)

where b is a number defined as 0 ≤ b < 4, c is a number defined as 0 ≤ c < 4, d is a number defined as 0 < d ≤ 2, and 0 < b + c + d ≤ 4.

The alkylstyrene-containing isoolefin-based polymer contains titanium oxide derived from titanium chloride. Titanium oxide is a white solid, and in a case where it is contained in a polymer, makes the polymer and polymer solution whitishly turbid. In a photoreaction, a reaction solution being turbid is typically undesirable because it can reflect light as a reaction energy source and decrease the reaction velocity or reaction rate in correspondence with the turbidity. A desirable concentration of titanium oxide allowable in the alkylstyrene-containing isoolefin-based polymer has an upper limit of preferably not less than 10 ppm, more preferably not less than 35 ppm, further preferably not less than 100 ppm, with respect to the total mass of the polymer. A concentration of titanium oxide allowable of not less than 10 ppm is preferable because in such a case, no additional step such as filtration is necessary.

### <Alkylstyrene>

Alkylstyrene contained in the alkylstyrene-containing isoolefin-based polymer is preferably a compound represented by the following General Formula (1): 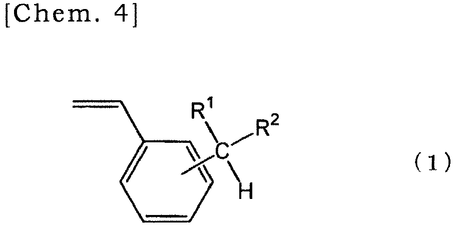 where R¹ and R² are each selected from a hydrogen, a halogen, a monovalent saturated alkyl group having 1 to 5 carbon atoms, and a halogenated alkyl group having 1 to 5 carbon atoms, and R¹ and R² may be identical to or different from each other.

The compound represented by General Formula (1) above is preferably o-methylstyrene, m-methylstyrene, or p-methylstyrene because they are easily available. The compound represented by General Formula (1) above is more preferably p-methylstyrene further in terms of polymerization reactivity.

### <Alkylstyrene-containing isoolefin-based polymer>

The alkylstyrene-containing isoolefin-based polymer contains, as a main component, an isoolefin-based monomer having 4 to 7 carbon atoms, and is a polymer containing at least an alkylstyrene unit. The alkylstyrene-containing isoolefin-based polymer is not particularly limited by any condition other than the above. In the present specification, a polymer containing an isoolefin-based monomer as a main component refers to a polymer in which an isoolefin-based monomer accounts for not less than 50 weight% of all the monomers contained in the polymer. Such an isoolefin-based monomer preferably accounts for 70 weight% to 99.9 weight%, more preferably 90 weight% to 99.9 weight%, of all the monomers contained in the polymer.

Examples of the isoolefin-based monomer include isobutene, 2-methyl-1-butene, 3-methyl-1-butene, 2-methyl-2-butene, and 4-methyl-1-pentene. Only one of the above substances may be used, or two or more of the above substances may be mixed for use. A polymer containing isobutylene, in particular, is preferable because such a polymer shows a good gas-barrier property and a good moisture barrier property and is excellent in practical use.

The alkylstyrene-containing isoolefin-based polymer may have any geometric structure. Examples of the geometric structure include a straight-chain structure, a star-shaped structure, a comb-shaped structure, a hyper-branched structure, a mesh structure, and a cyclic structure. Only one of the above geometric structures may form a polymer, or two or more of the above geometric structures may be mixed to form a polymer.

The alkylstyrene-containing isoolefin-based polymer contains alkylstyrene in an amount of preferably 0.05 weight% to 13 weight%, more preferably 0.2 weight% to 8 weight%, further preferably 0.6 weight% to 5 weight%, with respect to 100 weight% of the alkylstyrene-containing isoolefin-based polymer. An alkylstyrene content of not less than 0.05 weight% is preferable because such a content allows the isoolefin-based polymer to, after being brominated in a later step, easily exhibit properties of a bromine group. An alkylstyrene content of not more than 13 weight% is preferable because such a content increases the proportion of a living polymerization in the entire polymerization reaction and helps prevent the molecular-weight distribution from becoming wide.

The alkylstyrene-containing isoolefin-based polymer may contain, in addition to alkylstyrene, a cation-polymerizable monomer copolymerized therein. Examples of the cation-polymerizable monomer include (i) olefin-based monomers (such as butadiene, isoprene, ethylene, acetylene, propene, 1-butene, 1-pentene, and 1-hexene), (ii) styrene-based monomers (such as chlorostyrene, bromostyrene, aminostyrene, divinylbenzene, carboxystyrene, acetylstyrene, hydroxystyrene, methoxystyrene, nitrostyrene, sulfonylstyrene, and α-methylstyrene), (iii) plant-derived vinyl monomers (such as pinene, limonene, and terpene), and (iv) vinyl ether-based monomers (such as alkyl vinyl ether and phenyl vinyl ether). Only one of the above cation-polymerizable monomers may be used in the alkylstyrene-containing isoolefin-based polymer, or two or more of the above cation-polymerizable monomers may be mixed for use in the alkylstyrene-containing isoolefin-based polymer.

The alkylstyrene-containing isoolefin-based polymer may be a block copolymer of (i) a polymer block containing an isoolefin-based monomer as a main component and (ii) a polymer block containing an aromatic vinyl monomer as a main component.

In the present specification, a polymer block containing an isoolefin-based monomer as a main component refers to a polymer block in which an isoolefin-based monomer accounts for not less than 50 weight% of all the monomers contained in the polymer block. The isoolefin-based monomer accounts preferably for 70 weight% to 100 weight%, more preferably for 80 weight% to 100 weight%, further preferably for 85 weight% to 99.9 weight%, of all the monomers contained in the polymer block. The description below also uses the term "isoolefin-based polymer block" to refer to a polymer block containing an isoolefin-based monomer as a main component.

In the present specification, a polymer block containing an aromatic vinyl monomer as a main component refers to a polymer block in which an aromatic vinyl monomer accounts for not less than 50 weight% of all the monomers contained in the polymer block. The aromatic vinyl monomer accounts preferably for 70 weight% to 100 weight%, more preferably for 80 weight% to 100 weight%, of all the monomers contained in the polymer block. The description below also uses the term "aromatic vinyl polymer block" to refer to a polymer block containing an aromatic vinyl monomer as a main component.

Specific examples of the aromatic vinyl monomer include styrene, α-methylstyrene, β-methylstyrene, chloromethylstyrene, o-methylstyrene, m-methylstyrene, p-methylstyrene, 2,3-dimethylstyrene, 2,4-dimethylstyrene, 2,5-dimethylstyrene, 2,6-dimethylstyrene, 3,4-dimethylstyrene, 3,5-dimethylstyrene, o-tert-butyl styrene, m-tert-butyl styrene, p-tert-butyl styrene, o-chlorostyrene, m-chlorostyrene, and p-chlorostyrene.

The aromatic vinyl monomer is, among others, preferably styrene, α-methylstyrene, o-methylstyrene, m-methylstyrene, p-methylstyrene, o-chlorostyrene, m-chlorostyrene, or p-chlorostyrene in terms of polymerization reactivity. The aromatic vinyl monomer is more preferably styrene further in terms of flexibility in production of an isoolefin-based polymer.

The description under <Alkylstyrene> and the description under <Alkylstyrene-containing isoolefin-based polymer> combine to indicate that the alkylstyrene-containing isoolefin-based polymer is preferably arranged such that the alkylstyrene is p-methylstyrene and that the aromatic vinyl monomer is styrene. The alkylstyrene-containing isoolefin-based polymer is most preferably arranged such that the isoolefin-based monomer is isobutylene, that the aromatic vinyl monomer is styrene, and that the alkylstyrene is p-methylstyrene.

The block copolymer is not particularly limited in terms of how the isoolefin-based polymer block and the aromatic vinyl polymer block are configured. The block copolymer may have any block structure such as a diblock, a triblock, a tetrablock, or a pentablock. The block copolymer may have only one of the above block structures or a mixture of two or more of the above block structures. A block copolymer having an aromatic vinyl polymer block at each end (such as SIBS), in a case where individual block copolymers are physically crosslinked with each other at each end thereof, is expected to have an elastomeric property. On the other hand, a block copolymer having an isoolefin-based polymer block at each end, in a case where individual block copolymers are physically crosslinked with each other at the middle of the polymerization chain, is expected to have a specific viscosity as the individual block copolymers are arranged in a starfish shape.

The alkylstyrene in the block copolymer may be present in the isoolefin-based polymer block or in the aromatic vinyl polymer block. The isoolefin-based polymer block, which has a glass transition temperature (Tg) of lower than room temperature, is flowable at room temperature. Thus, in a case where an alkylstyrene unit is present in the isoolefin-based polymer block, the alkylstyrene is expected to interact with a third component. Specifically, in a case where a bromine group has been introduced into an alkyl group in a later brominating step, the brominated alkylstyrene enhances the effect of physical and chemical interaction with a third component, that is, the brominated alkylstyrene is expected to, for example, impart adhesiveness to a third component, improve the dispersibility of a third component, and/or chemically modify a third component. The aromatic vinyl polymer block, on the other hand, has a Tg higher than room temperature, and is not flowable at room temperature. In a case where an alkylstyrene unit is present in the aromatic vinyl polymer block, the alkylstyrene is expected to interact with another polymer component only within the block. Specifically, in the case where a bromine group has been introduced into an alkyl group in a later brominating step, the brominated alkylstyrene enhances the effect of physical and chemical interaction within the aromatic vinyl polymer block, that is, the brominated alkylstyrene is expected to, for example, improve the restorableness of the resin as a simple substance after compression and/or increase the tensile strength of the resin.

The polymer block containing an isoolefin-based monomer as a main component contains alkylstyrene in an amount of preferably 0.1 weight% to 15 weight%, more preferably 0.3 weight% to 10 weight%, further preferably 0.7 weight% to 6 weight%, with respect to 100 weight% of the polymer block containing an isoolefin-based monomer as a main component. An alkylstyrene content of not less than 0.1 weight% is preferable because it allows a bromine group to exhibit its properties in a case where the alkylstyrene has been brominated in a later step. Further, an alkylstyrene content of not more than 15 weight% is preferable because it increases the proportion of living polymerization reaction in the entire polymerization reaction to prevent the molecular-weight distribution from becoming wide.

The alkylstyrene-containing isoolefin-based polymer may contain an oxidized compound mixed therein that is derived from a Lewis acid catalyst used in the polymerization. The alkylstyrene-containing isoolefin-based polymer is, on the other hand, preferably free from totally unoxidized titanium chloride TiCl4 because TiCl4 may adversely influence the brominating reaction.

### <Halogen molecules>

In the present specification, a halogen molecule (X₂) is a fluorine molecule (F₂), a chlorine molecule (Cl₂), a bromine molecule (Br₂), or an iodine molecule (I₂). The halogen molecule is, among others, preferably a bromine molecule (Br₂) because such a halogen group has a greater effect of imparting properties to the alkylstyrene-containing isoolefin-based polymer. Specifically, the use of bromine molecules allows the synthesized halogenated isoolefin-based polymer to likely express preferable properties such as adhesiveness. In terms of the ability to (i) be decomposed even with use of long-wavelength light that does not damage the alkylstyrene-containing isoolefin-based polymer and (ii) cause a halogenation reaction to proceed, the halogen molecule is preferably a bromine molecule (Br₂) or an iodine molecule (I₂), each of which absorbs light beams within a long-wavelength range to be decomposed. The halogen molecule may be (i) put directly into the reaction system or (ii) formed inside the reaction system.

In a case where the halogen molecule (X₂) is to be put directly into a reaction system, it may be put in the form of a simple substance or as diluted with a solvent or the like. The halogen molecule is, before being put into a reaction system, preferably stored in a state where the halogen molecule is blocked from light.

In a case where the halogen molecule (X₂) is to be formed in a reaction system, a halogen compound is used. Examples of the halogen compound include N-chlorosuccinimide, N-bromosuccinimide, chloroform, bromoform, iodoform, dichloromethane, dibromomethane, carbon tetrachloride, carbon tetrabromide, sodium chloride, sodium bromide, sodium iodide, potassium chloride, potassium bromide, potassium iodide, hydrogen fluoride, hydrogen chloride, hydrogen bromide, and hydrogen iodide. The halogen compound undergoes a step such as reaction with a radical, heating, oxidation-reduction, or electrolysis to form a halogen molecule.

The production method described herein uses halogen molecules (X₂) in an amount of preferably 1.0 equivalent to 50 equivalents, more preferably 1.0 equivalent to 20 equivalents, most preferably 1.0 equivalent to 5 equivalents, with respect to the number of moles of the alkylstyrene unit in the alkylstyrene-containing isoolefin-based polymer. Using halogen molecules in an amount within the above range is preferable because it eliminates the need to reduce the halogen molecules (X₂) with use of a large amount of reducing agent after the reaction.

### <Light>

Irradiating, with light, the alkylstyrene-containing isoolefin-based polymer and the halogen molecules coexisting with each other cleaves the covalent bonds of the halogen molecules, and can efficiently form a halogen radical. The halogen radical can react with the alkyl group of the alkylstyrene, and can thus halogenate the alkylstyrene-containing isoolefin-based polymer. The light may have any wavelength. The wavelength of the light is, however, preferably 280 nm to 800 nm, more preferably 315 nm to 620 nm, further preferably 380 nm to 590 nm. Light with a wavelength of not less than 280 nm is preferable because such light is not absorbed by various structures in the substance. For instance, since the aromatic structure in the polymer can absorb an optical energy having wavelengths close to 280 nm, light with a wavelength of less than 280 nm may damage the polymer. Further, light with a wavelength of not more than 800 nm is preferable because such light has an energy sufficient to cleave the covalent bonds of the halogen molecules. Bromine molecules (Br₂) and iodine molecules (I₂) are preferable because those molecules, which absorb light beams within a long-wavelength range to be decomposed, do not likely damage the polymer during photoreaction.

The light may be emitted by any light source. Examples of the light source include a mercury lamp, a tungsten lamp, a halogen lamp, an acetylene lamp, and an LED lamp. An LED lamp, among others, is preferable because it has a narrow wavelength distribution and can thus efficiently provide light having a wavelength necessary to cleave the covalent bonds of the halogen molecules. Further, an LED lamp is preferable also because it emits light free from unnecessary wavelengths and can thus prevent (i) a failure to cause a reaction and (ii) formation of a byproduct.

### <<Production method>>

The halogenated isoolefin-based polymer is produced by (i) bringing an alkylstyrene-containing isoolefin-based polymer produced by a living cationic polymerization involving use of titanium chloride as a Lewis acid catalyst into contact with halogen molecules and then (ii) irradiating the alkylstyrene-containing isoolefin-based polymer and the halogen molecules with light.

### <Polymerization method>

The alkylstyrene-containing isoolefin-based polymer is produced by a living cationic polymerization involving use of carbocations as a growing species.

The polymerization uses, as a polymerization initiator, a compound represented by General Formula (4) below. The compound presumably produces carbocations in the presence of a Lewis acid catalyst to serve as the origin of a cationic polymerization.

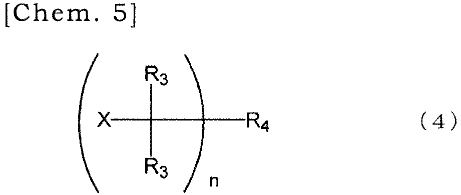

where the plurality of R³s are each independently a hydrogen atom or a monovalent hydrocarbon group having 1 to 6 carbon atoms; R⁴ is a monovalent or polyvalent aromatic hydrocarbon group or a monovalent or polyvalent aliphatic hydrocarbon group; X is a halogen atom, an alkoxyl group having 1 to 6 carbon atoms, or an acyloxyl group having 1 to 6 carbon atoms, where in a case where a plurality of Xs are present, they may be identical to or different from one another; and n is an integer of 1 to 6.

Examples of the polymerization initiator include p-dicumylchloride, m-dicumylchloride, (1-chloroisopropyl) benzene, acetic acid 1-chloroethyl, and 2-chloro2-methylpropane.

The polymerization reaction proceeds in the presence of a Lewis acid catalyst. The Lewis acid catalyst contains at least one titanium chloride selected from the group consisting at least of TiCl₄, TiCl₃(OⁱPr), TiCl₂(OⁱPr)₂, and TiCl(OⁱPr)₃. The polymerization reaction may involve further use of, in combination with titanium chloride, another Lewis acid catalyst usable for cationic polymerization as the Lewis acid catalyst. Specific examples of such another Lewis acid catalyst for combinational use include BCl₃, BF₃, BF₃·OEt₂, SnCl₄, SbCl₅, SbF₅, WCl₆, TaCl₅, VCl₅, FeCl₃, FeBr₃, ZnCl₂, ZnBr₂, AlCl₃, AlBr₃, Et₂AlCl, EtAlCl₂, Me₂AlCl, and MeAlCl₂. The present specification uses the symbol "Me" to mean a methyl group, "Et" to mean an ethyl group, and "ⁱPr" to mean an isopropyl group.

Titanium chloride is preferable over other Lewis acid catalysts because, for example, it is (i) stable in the form of a simple substance, (ii) easy to handle, (iii) flexible in production of an isoolefin-based polymer, and (iv) easy to obtain. More specifically, TiCl₄ is more preferable than other titanium chlorides because it is easier to obtain and higher in polymerization activity.

The Lewis acid catalyst may be used in any amount. The amount may be set in view of, for example, (i) the polymerization properties and concentration of each monomer used, (ii) a desired polymerization time period, and (iii) a desired change in the heating state in the system. The Lewis acid catalyst is used in an amount that is preferably 0.1 times to 200 times, more preferably 0.2 times to 100 times, the polymerization initiator represented by General Formula (4) above in terms of the number of moles.

The polymerization reaction may involve further use of an electron donor component as necessary. An electron donor component presumably serves to stabilize carbocations at a growing terminal during a cationic polymerization. The combinational use of an electron donor component allows for production of a polymer having a narrow molecular-weight distribution and a controlled structure. The electron donor component is not limited to any particular kind. Specifically, example electron donor components include a pyridine, an amine, an amide, a sulfoxide, an ester, and a metallic compound having a metal atom with which an oxygen atom is bonded.

Among the above electron donor components, a substance is normally used that has a donor number of 15 to 60, the donor number being defined as a parameter indicative of a strength as an electron donor. Specific examples of such an electron donor component include 2,6-di-t-butylpyridine, 2-t-butylpyridine, 2,4,6-trimethylpyridine, 2,6-dimethylpyridine, 2-methylpyridine, pyridine, diethylamine, trimethylamine, triethylamine, tributylamine, N,N-dimethylaniline, N,N-dimethylformamide, N,N-dimethylacetamide, N,N-diethylacetamide, dimethylsulfoxide, diethylether, methyl acetate, ethyl acetate, trimethyl phosphate, hexamethylphosphoric triamide, titanium alkoxide such as titanium (III) methoxide, titanium (IV) methoxide, titanium (IV) isopropoxide, and titanium (IV) butoxide, and aluminum alkoxide such as aluminum triethoxide and aluminum tributoxide.

Among the above electron donor components, preferable examples include 2,6-di-t-butylpyridine, 2,6-dimethylpyridine, 2-methylpyridine, pyridine, diethylamine, trimethylamine, triethylamine, N,N-dimethylformamide, N,N-dimethylacetamide, dimethyl sulfoxide, titanium (IV) isopropoxide, and titanium (IV) butoxide. Particularly preferable among these substances are (i) 2-methylpyridine, with which the above effect is remarkable, (ii) titanium (IV) isopropoxide, which renders the reaction system uniform, and (iii) triethylamine, which is not easily influenced by water.

The respective donor numbers of the above various substances are shown in "Donah to Akuseputah" written by Gutmann, translated by Otaki and Okada (Gakkai Shuppan Center, 1983).

The electron donor component is used in an amount that is typically 0.01 times to 100 times, preferably 0.1 times to 50 times, the polymerization initiator in terms of the number of moles.

The polymerization reaction can be carried out in an organic solvent as necessary. The organic solvent may be any solvent that is commonly used for cationic polymerization. Examples of the organic solvent include a halogenated hydrocarbon-based solvent, a non-halogen-based solvent (such as an aliphatic hydrocarbon-based solvent, an alicyclic hydrocarbon-based solvent, and an aromatic hydrocarbon-based solvent), and a mixture thereof.

The halogenated hydrocarbon-based solvent is not limited to any particular kind. Examples of the halogenated hydrocarbon-based solvent include methyl chloride, butyl chloride, methylene chloride, chloroethane, dichloroethane, 1-chloropropane, 1-chloro-2-methylpropane, 1-chlorobutane, 1-chloro-2-methylbutane, 1 -chloro-3-methylbutane, 1-chloro-2,2-dimethylbutane, 1-chloro-3,3-dimethylbutane, 1-chloro-2,3-dimethylbutane, 1-chloropentane, 1-chloro-2-methylpentane, 1-chloro-3-methylpentane, 1-chloro-4-methylpentane, 1-chlorohexane, 1-chloro-2-methyl hexane, 1-chloro-3-methyl hexane, 1-chloro-4-methyl hexane, 1-chloro-5-methyl hexane, 1-chloroheptane, 1-chlorooctane, 2-chloropropane, 2-chlorobutane, 2-chloropentane, 2-chlorohexane, 2-chloroheptane, 2-chlorooctane, and chlorobenzene. Only one of the above halogenated hydrocarbon-based solvents may be used, or two or more of the above halogenated hydrocarbon-based solvents may be mixed for use.

Examples of the non-halogen-based solvent include butane, pentane, hexane, heptane, octane, nonane, decane, 2-methylpropane, 2-methylbutane, 2,3,3-trimethylpentane, 2,2,5-trimethylhexane, cyclohexane, methylcyclohexane, ethyl cyclohexane, paraffin oil, benzene, toluene, xylene, ethylbenzene, propyl benzene, and butyl benzene. Only one of the above non-halogen-based solvents may be used, or two or more of the above non-halogen-based solvents may be mixed for use.

Among the above organic solvents, a mixed solvent of (i) a solvent based on a monohalogenated hydrocarbon having 3 to 5 carbon atoms and (ii) an aliphatic hydrocarbon-based solvent is preferable because (i) an isobutylene-based block copolymer is highly soluble in such a mixed solvent and (ii) the mixed solvent is economical. The organic solvent is most suitably a mixed solvent of (i) one or more solvents selected from the group consisting of 1-chloropropane, 1-chlorobutane, and 1-chloropentane and (ii) one or more solvents selected from the group consisting of pentane, hexane, heptane, cyclohexane, methylcyclohexane, and ethyl cyclohexane in terms of (i) high solubility of substances involved in the reaction, (ii) promotion of the polymerization reaction, (iii) distillability in an aftertreatment step, and (iv) economy.

The organic solvent is used in an amount that allows the resulting polymer to have a concentration of preferably 1 weight% to 50 weight%, more preferably 3 weight% to 35 weight%, in view of the viscosity of the alkylstyrene-containing isoolefin-based polymer solution and ease of removal of heat from the reaction system.

The above cationic polymerization is known to be usually inhibited by water entering the reaction system. Water in the solvent is thus desirably removed before being used in the polymerization. Water in the solvent can be removed by, for example, adding calcium chloride or a molecular sieve (which are common dehydrators) to the solvent or bringing the same into contact with the solvent.

A solvent for use in the polymerization can be purified at a higher level by distillation, for example. Distillation can almost completely remove any impurity having a different boiling point. Specific examples of the distillation method include batch distillation and continuous distillation.

The batch distillation method includes, for example, (i) extracting a liquid distillate at the tower top during the initial stage of distillation to remove any impurity with a low boiling point and (ii) extracting a liquid remaining at the tower bottom after distillation to remove any impurity with a high boiling point. The continuous distillation method uses, depending on the kind of impurity to be removed, one or more distillation towers to remove the impurity.

The polymerization reaction is carried out such that the individual ingredients are mixed and polymerized in a cooled environment. The ingredients are mixed and polymerized at a temperature within a suitable range of preferably not lower than -100°C and lower than 0°C, more preferably -80°C to -30°C in view of temperature energy cost and polymerization reaction stability.

The alkylstyrene-containing isoolefin-based polymer solution may be produced by adding a Lewis acid catalyst, a polymerization initiator, an electron donor component and each monomer component by, for example, any method and in any order. Preferable examples of the method include those described later under the headings (Production Example 1) and (Production Example 2).

The polymerization reaction stops through oxidative inactivation of the Lewis acid catalyst. The oxidative inactivation is carried out by adding an oxidizing agent. The oxidizing agent is not limited to any particular kind. Examples of the oxidizing agent include water, an alcohol-based compound, oxygen, and a peroxide.

The Lewis acid catalyst, when oxidatively inactivated, becomes an oxide. In a case where the Lewis acid catalyst is titanium chloride, it becomes separated as titanium oxide, which is in the form of a white solid.

Titanium oxide can be removed by aqueous cleaning, filtration, or centrifugation. Removing titanium oxide to allow only a trace amount to be left, however, involves not only combining the above removal methods but also carrying out a removal operation based on each method a plurality of times. Thus, since an increase in the number of steps imposes a load, a small amount of remaining titanium oxide preferably does not influence a later reaction or physical properties of a finished product. Specifically, in a case where titanium oxide is allowed to remain in an amount of not less than 10 ppm, more preferably not less than 35 ppm, further preferably not less than 100 ppm, in view of a later reaction and physical properties of a finished product, the step of removing titanium oxide can be said to impose a reduced load.

### <Halogenation reaction>

The alkylstyrene-containing isoolefin-based polymer (which is a polymer produced by polymerizing monomers in the presence of a catalyst) is, in an environment where it is in contact with halogen molecules, irradiated with light for a halogenation reaction to introduce a halogen group into the alkyl group derived from the alkylstyrene.

The halogen is preferably bromine, which allows a halogenated isoolefin-based polymer as a reaction product to contain a halogen group that produces a great effect. The effect of the halogen group mainly means, for example, adhesiveness to another base material. The effect is, however, not limited to such adhesiveness.

The halogen source may suitably be a molecular halogen (X₂) or a conventionally publicly known substance as such N-halogen succinimide. The halogen source is preferably a molecular halogen in terms of availability, ease of handling, and economy.

The molecular halogen (X₂) is used in an amount of preferably 0.5 equivalents to 50 equivalents, more preferably 0.8 equivalents to 20 equivalents, most preferably 1.0 equivalent to 5 equivalents, with respect to the number of moles of the alkylstyrene unit in the alkylstyrene-containing isoolefin-based polymer.

The halogenation reaction may be carried out in a solid phase or in a solution. The halogenation reaction is, however, preferably carried out in an organic solvent such as a non-halogen-based solvent (such as an aliphatic hydrocarbon-based solvent, an alicyclic hydrocarbon-based solvent, or an aromatic hydrocarbon-based solvent) or a halogenated hydrocarbon-based solvent.

Preferable examples of the non-halogen-based solvent include butane, pentane, hexane, heptane, octane, nonane, decane, 2-methylpropane, 2-methylbutane, 2,3,3-trimethylpentane, 2,2,5-trimethylhexane, cyclohexane, methylcyclohexane, ethyl cyclohexane, paraffin oil, benzene, toluene, xylene, ethylbenzene, propyl benzene, and butyl benzene.

Preferable examples of the halogenated hydrocarbon-based solvent include methyl chloride, methylene chloride, chloroethane, dichloroethane, 1-chloropropane, 1-chloro-2-methylpropane, 1-chlorobutane, 1 -chloro-2-methylbutane, 1 -chloro-3-methylbutane, 1-chloro-2,2-dimethylbutane, 1-chloro-3,3-dimethylbutane, 1-chloro-2,3-dimethylbutane, 1-chloropentane, 1-chloro-2-methylpentane, 1-chloro-3-methylpentane, 1-chloro-4-methylpentane, 1-chlorohexane, 1-chloro-2-methyl hexane, 1-chloro-3-methyl hexane, 1-chloro-4-methyl hexane, 1-chloro-5-methyl hexane, 1-chloroheptane, 1-chlorooctane, 2-chloropropane, 2-chlorobutane, 2-chloropentane, 2-chlorohexane, 2-chloroheptane, 2-chlorooctane, and chlorobenzene.

Only one of the above organic solvents may be used, or two or more of the above organic solvents may be mixed for use.

The halogenation reaction suitably involves use of a mixed solvent of (i) one or more solvents selected from the group consisting of 1-chloropropane, 1-chlorobutane, and 1-chloropentane and (ii) one or more solvents selected from the group consisting of pentane, hexane, heptane, cyclohexane, methylcyclohexane, and ethyl cyclohexane in terms of (i) high solubility of reactants, (ii) promotion of the polymerization reaction, (iii) distillability in an aftertreatment step, and (iv) economy. Most preferably, the solvent used for the polymerization reaction is, among others, also used in the halogenation reaction.

The organic solvent is used in an amount that allows the resulting alkylstyrene-containing isoolefin-based polymer to have a concentration of preferably 1 weight% to 50 weight%, more preferably 3 weight% to 35 weight%, in view of the viscosity of the reaction solution during the halogenation reaction and ease of removal of heat from the reaction system.

The reaction solution (alkylstyrene-containing isoolefin-based polymer solution) during the halogenation reaction has a temperature adjusted in view of, for example, the efficiency of the reaction, the stability of the polymer, and the boiling point of the solvent. The temperature is kept preferably within a range of 0°C to 100°C, more preferably within a range of 10°C to 60°C, for a brominating reaction to proceed efficiently. A temperature of not lower than 0°C is economically preferable because it eliminates the need to cool the reaction solution in a separate step. A temperature of not higher than 100°C is also economically preferable because it eliminates the need to heat the reaction solution in a separate step.

The halogenated isoolefin-based polymer may have any weight-average molecular weight. The halogenated isoolefin-based polymer has a weight-average molecular weight of preferably 50,000 to 500,000, more preferably 70,000 to 300,000, in terms of polymerization reaction.

### <Resin composition>

The halogenated isoolefin-based polymer may further contain a stabilizer and/or stabilizing auxiliary agent to prevent the physical properties from being changed by an external factor during a production or molding step. The present invention, in other words, includes in its scope a resin composition containing the halogenated isoolefin-based polymer.

Examples of the stabilizer include an antioxidant (such as a hindered phenol-based antioxidant, a phosphoric ester-based antioxidant, an amine-based antioxidant, and a sulfur-based antioxidant), an ultraviolet absorber (such as a benzothiazole-based ultraviolet absorber and a benzophenone-based ultraviolet absorber), and a photo stabilizer (such as a hindered amine-based photo stabilizer).

Examples of the stabilizing auxiliary agent include organic stabilizing auxiliary agents (such as a phosphite, an epoxy compound, and β-diketone) and inorganic stabilizing auxiliary agents (such as metal perchlorate and hydrotalcite).

The stabilizer and/or stabilizing auxiliary agent is contained in a recommended amount (in terms of the total weight) of 0.000001 parts by weight to 50 parts by weight, preferably 0.00001 parts by weight to 10 parts by weight, with respect to 100 parts by weight of the halogenated isoolefin-based polymer.

Only one of the above stabilizers and/or stabilizing auxiliary agents may be used, or two or more of the above stabilizers and/or stabilizing auxiliary agents may be mixed for use.

### <Applications>

The halogenated isoolefin-based polymer is excellent in such physical properties as the gas-barrier property, plasticity, moldability, rubber property, mechanical strength, and compression set property. The halogenated isoolefin-based polymer thus finds, for example, the applications listed below.
(1) Modifiers: thermoplastic resin modifiers (such as an impact resistance modifier, a vibration-damping modifier, a gas-barrier property modifier, and a softening agent), thermosetting resin modifiers (such as an impact resistance modifier and a stress-reducing agent), asphalt modifiers (such as a road asphalt modifier, a waterproof sheet asphalt modifier, and a bridge deck waterproof material), tire modifiers (such as an agent for improving the wet grip property of a tire), and rubber modifiers.
(2) Adhesives and tackiness agents: hot-melt adhesives, water-based adhesives, and solvent-based adhesives and tackiness agents.
(3) Viscosity modifiers: viscosity modifiers to be added to, for example, oils and lubricants.
(4) Coating agents: base resins and sealants for paints.
(5) Materials alternative to PVC: wire coating materials (such as a cable, a connector, and a plug), toys (such as a doll), masking tapes, logo marks (such as those on sportswear and sports shoes), trolley bags, clothing wrapping materials, hoods for tracks, agricultural films (such as those for greenhouse cultivation), erasers, aprons for business use (tarpaulin), building interior materials (such as a flooring material and a ceiling material), raincoats, umbrellas, shopping bags, outer covers (such as those for chairs, sofas, belts, and bags), garden hoses, refrigerator gaskets (packings), flexible hoses (such as those for washing machines and cleaners), and automobile interior materials.
(6) Vibration-damping materials, vibration-proof materials, and buffer materials: vibration-damping materials (in particular, those attached to aluminum plates or steel sheets in a multilayer), vibration-proof materials, buffer materials (such as those for architecture, automobiles, floor vibration-damping, flooring, play equipment, precision equipment, and electronic equipment), shoe soles, grips (such as those for stationery, toys, everyday goods, and carpenter's tools), grips and core materials for golf clubs and bats and rubbers and grips for tennis rackets and table tennis rackets.
(7) Sound insulating materials and sound absorbing materials: interior and exterior materials for automobiles, ceiling materials for automobiles, rail vehicle materials, and piping materials.
(8) Sealing materials: gas-barrier materials (such as a gasket, an architectural gasket, a plug, a glass sealing material for laminated glass or multiple layered glass, a wrapping material, a sheet, a multilayer sheet, a container, and a multilayer container), construction sheets, waterproof sheets, package transportation materials, sealants, medical vial plugs, and syringe gaskets.
(9) Tubes: medical tubes, ink tubes, food product tubes, and tire tubes.
(10) Foams: foams produced by foam molding such as beads foaming, reduced pressure foaming, and extrusion foaming (such as a piping coating material, synthetic wood, and a wood flour-based foam), and carriers of foaming agents for chemical foaming and physical foaming.
(11) Others: clothing, flame retarders, lid-closing fittings, caps, bags, gaskets, hoses, shoes, exercise gear, foaming fireproof sheets, automobile parts (such as an air bag cover, a bumper, an interior part [outer covers for instrument panels and shift knobs], a weather strip, roof molding, molding under a door, and a tire inner liner), food product containers (such as a food product tray for a microwave oven, a food product container for a portion, a laminate film for a food product container, a polystyrene sheet for a food product container [such as a container for raw fish slices and a package for chicken eggs], a cup-shaped container for ramen noodles, a polystyrene-based mesh foam, a frozen-dessert cup, and a transparent beverage cup), IC trays, CD-ROM chassis, wheel caps, elastic yarn, nonwoven fabric, wire harness, a back sheet for a disposable diaper, a compound material for two-color molding, water goggles, a PC mouse, cushions, and stoppers.

### [Examples]

The present invention will be described below in greater detail on the basis of Examples. The present invention is, however, not limited by the production examples below in any manner.

### (Molecular weight measurement)

In the Examples below, the "number-average molecular weight", the "weight-average molecular weight", and the "molecular-weight distribution (that is, the ratio between the weight-average molecular weight and the number-average molecular weight)" were calculated by size permeation chromatography (SEC) with reference to a polystyrene standard. The measurements were made with use of Model 510 GPC system available from Waters Corporation. The measurements were made by injecting a sample solution having a polymer concentration of 4 mg/mL into a gel permeation chromatography (GPC) column with a temperature of 35°C with use of chloroform as a mobile phase and polystyrene as a standard sample.

### (Production Example 1)

The gas inside the container of a 200-L stainless steel polymerization device was replaced with nitrogen. Then, 83.898 L of butyl chloride (as dried with use of a molecular sieve) and 35.956 L of hexane (as dried with use of a molecular sieve) were put into the container through a pipe. Brine having a temperature of -75°C was let flow through the jacket of the polymerization device to cool the polymerization device. Then, 29.329 L (310.49 mol) of an isobutylene monomer was added. Next, 48.805 g (0.211 mol) of p-dicumylchloride and 64.09 g (0.63 mol) of triethylamine were added. Next, 625 mL (2.11 mol) of titanium (IV) isopropoxide was added, and the solution inside the polymerization device was cooled down to -70°C. Finally, 1.621 L (14.78 mol) of titanium tetrachloride was added to start polymerization.

Soon after the titanium tetrachloride was added, a solution prepared by dissolving 1.113 kg (8.45 mol) of p-methylstyrene in a mixed solvent of 2.903 kg of butyl chloride and 0.927 kg of hexane was dropped in the total amount with use of a dropping instrument at a flow rate of 164.76 g/min over 30 minutes. During the reaction, the reaction solution was extracted at predetermined time points, and the respective concentrations of isobutylene and p-methylstyrene were measured. The measurements showed that the concentration of unreacted p-methylstyrene was highest at the end of the drop of p-methylstyrene, the concentration being 4.6 mol% with respect to the amount of unreacted isobutylene present at the end of the drop of p-methylstyrene. Then, 104 minutes after the titanium tetrachloride was added, gas chromatography showed that 99 weight% of isobutylene and p-methylstyrene had been consumed. At this time point, the random copolymer of isobutylene and p-methylstyrene had a weight-average molecular weight of 99,626 and a molecular-weight distribution of 1.35.

Then, 120 minutes after the titanium tetrachloride was added, 4.235 L (36.78 mol) of a styrene monomer was added. Then, 120 minutes after the styrene monomer was added, gas chromatography showed that 80 weight% of the styrene monomer added had been consumed. Next, the reaction solution was injected in its entirety into (2.8 weight%) 125 L of an aqueous sodium hydroxide solution heated to 70°C, and the mixture was vigorously stirred for 60 minutes to stop the polymerization. Next, the reaction solution was cleaned with 125 L of pure water twice. The polymer solution as cleaned was clouded, and an analysis of the components of the solution showed that the solution contained 300 ppm of titanium. The content of titanium corresponded to the content of titanium oxide. Components other than the polymer and titanium were contained in an amount of not more than 10 ppm. Then, the solution was heated to distill out volatile components such as the solvent for drying. This prepared 21.3 kg of an isoolefin-based polymer containing an alkylstyrene unit. The polymer prepared had a weight-average molecular weight of 119,028 and a molecular-weight distribution of 1.52. This alkylstyrene-containing isoolefin-based polymer was a block copolymer of an isoolefin-based polymer block and an aromatic vinyl polymer block. The isoolefin-based polymer block contained alkylstyrene in an amount of 4.4 weight%.

### (Production Example 2)

The gas inside the container of a 200-L stainless steel polymerization device was replaced with nitrogen. Then, 89.593 L of butyl chloride (as dried with use of a molecular sieve) and 38.397 L of hexane (as dried with use of a molecular sieve) were put into the container through a pipe. Brine having a temperature of -75°C was let flow through the jacket of the polymerization device to cool the polymerization device. Then, 25.311 L (267.960 mol) of an isobutylene monomer was added. Next, 21.06 g (0.0911 mol) of p-dicumylchloride and 55.314 g (0.547 mol) of triethylamine were added. Next, 693 mL (2.34 mol) of titanium (IV) isopropoxide was added, and the solution inside the polymerization device was cooled down to -70°C. Finally, 1.798 L (16.40 mol) of titanium tetrachloride was added to start polymerization.

Soon after the titanium tetrachloride was added, a solution prepared by dissolving 0.215 kg (1.82 mol) of p-methylstyrene in a mixed solvent of 0.925 kg of butyl chloride and 0.295 kg of hexane was dropped in the total amount with use of a dropping instrument at a flow rate of 47.9 g/min over 30 minutes. Then, 109 minutes after the titanium tetrachloride was added, gas chromatography showed that 99 weight% of isobutylene and p-methylstyrene had been consumed. At this time point, the random copolymer of isobutylene and p-methylstyrene had a weight-average molecular weight of 59,630 and a molecular-weight distribution of 1.77.

Then, 129 minutes after the titanium tetrachloride was added, 3.654 L (31.74 mol) of a styrene monomer was added. Next, 15 minutes after the styrene monomer was added, 1.037 kg (5.47 mol) of titanium tetrachloride was further added. Then, 176 minutes after the styrene monomer was added, gas chromatography showed that 81 weight% of the styrene monomer added had been consumed. Next, the reaction solution was injected in its entirety into (2.3 weight%) 178 L of an aqueous sodium hydroxide solution heated to 70°C, and the mixture was vigorously stirred for 60 minutes to stop the polymerization. Next, the reaction solution was cleaned with 178 L of pure water twice. The polymer solution as cleaned was clouded, and an analysis of the components of the solution showed that the solution contained 2000 ppm of titanium. The content of titanium corresponded to the content of titanium oxide. Components other than the polymer and titanium were contained in an amount of not more than 50 ppm. Then, the solution was heated to distill out volatile components such as the solvent for drying. This prepared 17.9 kg of an isoolefin-based polymer containing an alkylstyrene unit. The polymer prepared had a weight-average molecular weight of 116,388 and a molecular-weight distribution of 1.61. This alkylstyrene-containing isoolefin-based polymer was a block copolymer of an isoolefin-based polymer block and an aromatic vinyl polymer block. The isoolefin-based polymer block contained alkylstyrene in an amount of 0.9 weight%.

### (Turbidity measurement)

Turbidity was measured of a quartz cell full of a sample solution with use of a hazemeter (HZ-V3) by a double-beam method (in conformity to JIS K 7136).

### (Example 1)

First, 12 g of the alkylstyrene-containing isoolefin-based polymer produced in Production Example 1 above (containing 300 ppm of titanium) was mixed with 52 g of a mixed solvent of 1-chlorobutane and hexane (9:1 [volume ratio]) in a separable flask, and was dissolved therein at room temperature. The resulting solution was then subjected to nitrogen bubbling for 30 minutes. During the bubbling, when the polymer was entirely dissolved, a portion of the polymer solution was placed in a quartz cell, and the turbidity of the solution was measured. The turbidity was 84. After the bubbling, 1.29 g (8.0 mmol) of bromine was weighed out in a state where the bromine was blocked from light as much as possible, and was added to the polymer solution. Next, the polymer solution was irradiated with light by a single commercially available LED lamp (household, visible-light LED lamp, equivalent to a 60-W electric light bulb, 810 lm) through the separable flask, while the polymer solution was stirred at room temperature. Over time, the polymer solution started to show observable, reddish-brown fading derived from bromine. Then, 30 minutes after the start of light irradiation, the polymer solution was dropped into a large amount of methanol for precipitation of the polymer. The polymer precipitated was cleaned with methanol several times, and was then dried for 1 hour in an oven having a temperature of 70°C. This prepared a brominated isoolefin-based polymer. NMR was performed to determine the respective amounts of the methyl group of p-methylstyrene (unreacted) and the bromomethyl group of p-bromomethylstyrene (brominated), the respective amounts indicating that the methyl group of 93% of the p-methylstyrene in the polymer had been brominated.

### (Example 2)

First, 100 g of the alkylstyrene-containing isoolefin-based polymer produced in Production Example 1 above (containing 300 ppm of titanium) was dissolved in 500 g of 1-chlorobutane. Next, the solution prepared was mixed with 30 g of Radiolite 900, and the mixture was filtered through a filter having a mesh size of 1 µm. After that, the filtrate obtained was dried at 80°C in a high vacuum for 24 hours. This prepared an alkylstyrene-containing isoolefin-based polymer with turbidness removed. Then, 70 g of the alkylstyrene-containing isoolefin-based polymer with turbidness removed was mixed with 303 g of a mixed solvent of 1-chlorobutane and hexane (9:1 [volume ratio]) in a separable flask, and was dissolved therein at room temperature. The resulting solution was then subjected to nitrogen bubbling for 30 minutes. During the bubbling, when the polymer was entirely dissolved, a portion of the polymer solution was placed in a quartz cell, and the turbidity of the solution was measured. The turbidity was 25. After the bubbling, 7.53 g (46.7 mmol) of bromine was weighed out in a state where the bromine was blocked from light as much as possible, and was added to the polymer solution. Next, the polymer solution was irradiated with light by four commercially available LED lamps (household, visible-light LED lamps, each equivalent to a 60-W electric light bulb, 810 lm) through the separable flask, while the polymer solution was stirred at room temperature. Over time, the polymer solution started to show observable fading of reddish brown derived from bromine. Then, 30 minutes after the start of light irradiation, the polymer solution was dropped into a large amount of methanol for precipitation of the polymer. The polymer precipitated was cleaned with methanol several times, and was then dried for 1 hour in an oven having a temperature of 70°C. This prepared a brominated isoolefin-based polymer. NMR was performed to determine the respective amounts of the methyl group of p-methylstyrene (unreacted) and the bromomethyl group of p-bromomethylstyrene (brominated), the respective amounts indicating that the methyl group of 95% of the p-methylstyrene in the polymer had been brominated. This Example produced a halogenated isoolefin-based polymer having a weight-average molecular weight of 117,000.

### (Example 3)

First, 42.5 g of the alkylstyrene-containing isoolefin-based polymer produced in Production Example 2 above (containing 2000 ppm of titanium) was mixed with 290 g of a mixed solvent of 1-chlorobutane and hexane (9:1 [volume ratio]) in a separable flask, and was dissolved therein at room temperature. The resulting solution was then subjected to nitrogen bubbling for 30 minutes. During the bubbling, when the polymer was entirely dissolved, a portion of the polymer solution was placed in a quartz cell, and the turbidity of the solution was measured. The turbidity was 96. After the bubbling, 0.86 mL (0.0167 mol) of bromine was weighed out in a state where the bromine was blocked from light as much as possible, and was added to the polymer solution. Next, the polymer solution was irradiated with light having a illuminance of 600 W/m² by a single blue LED lamp having a peak top at a wavelength of 476 nm (current: 0.73A, voltage: 3.9 V) through the separable flask, while the polymer solution was stirred at room temperature. Over time, the polymer solution started to show observable, reddish-brown fading derived from bromine. Then, 120 minutes after the start of light irradiation, the polymer solution was dropped into a large amount of methanol for precipitation of the polymer. The polymer precipitated was cleaned with methanol several times, and was then dried for 1 hour in an oven having a temperature of 70°C. This prepared a brominated isoolefin-based polymer. NMR was performed to determine the respective amounts of the methyl group of p-methylstyrene (unreacted) and the bromomethyl group of p-bromomethylstyrene (brominated), the respective amounts indicating that the methyl group of 88% of the p-methylstyrene in the polymer had been brominated. This Example produced a halogenated isoolefin-based polymer having a weight-average molecular weight of 198,000.

### (Example 4)

First, 100 g of the alkylstyrene-containing isoolefin-based polymer produced in Production Example 2 above (containing 2000 ppm of titanium) was dissolved in 500 g of 1-chlorobutane. Next, the solution prepared was mixed with 30 g of Radiolite 900, and the mixture was filtered through a filter having a mesh size of 1 µm. After that, the filtrate obtained was dried at 80°C in a high vacuum for 24 hours. This prepared an alkylstyrene-containing isoolefin-based polymer with turbidness removed. A component analysis of the substance prepared showed that the content of titanium had decreased to 35 ppm and that components other than the polymer and titanium were contained in an amount of not more than 50 ppm. Then, 42.5 g of the alkylstyrene-containing isoolefin-based polymer with turbidness removed (containing 35 ppm of titanium) was mixed with 290 g of a mixed solvent of 1-chlorobutane and hexane (9:1 [volume ratio]) in a separable flask, and was dissolved therein at room temperature. The resulting solution was then subjected to nitrogen bubbling for 30 minutes. During the bubbling, when the polymer was entirely dissolved, a portion of the polymer solution was placed in a quartz cell, and the turbidity of the solution was measured. The turbidity was 14. After the bubbling, 0.86 g (0.0167 mmol) of bromine was weighed out in a state where the bromine was blocked from light as much as possible, and was added to the polymer solution. Next, the polymer solution was irradiated with light having an illuminance of 600 W/m² by a single blue LED lamp having a peak top at a wavelength of 476 nm (current: 0.73A, voltage: 3.9 V) through the separable flask, while the polymer solution was stirred at room temperature. Over time, the polymer solution started to show observable, reddish-brown fading derived from bromine. Then, 120 minutes after the start of light irradiation, the polymer solution was dropped into a large amount of methanol for precipitation of the polymer. The polymer precipitated was cleaned with methanol several times, and was then dried for 1 hour in an oven having a temperature of 70°C. This prepared a brominated isoolefin-based polymer. NMR was performed to determine the respective amounts of the methyl group of p-methylstyrene (unreacted) and the bromomethyl group of p-bromomethylstyrene (brominated), the respective amounts indicating that the methyl group of 92% of the p-methylstyrene in the polymer had been brominated. This Example produced a halogenated isoolefin-based polymer having a weight-average molecular weight of 198,000.

### (Comparative Example 1)

First, 12 g of the alkylstyrene-containing isoolefin-based polymer produced in Production Example 1 above (containing 300 ppm of titanium) was mixed with 52 g of a mixed solvent of 1-chlorobutane and hexane (9:1 [volume ratio]) in a separable flask, and was dissolved therein at room temperature. The resulting solution was then subjected to nitrogen bubbling for 30 minutes. During the bubbling, when the polymer was entirely dissolved, a portion of the polymer solution was placed in a quartz cell, and the turbidity of the solution was measured. The turbidity was 84. After the bubbling, 1.29 g (8.0 mmol) of bromine was weighed out in a state where the bromine was blocked from light as much as possible, and was added to the polymer solution. Further, a solution prepared by dissolving 0.0163 g of azobisisobutyronitrile (AIBN) in 0.69 g of a mixed solvent of 1-chlorobutane and hexane (9:1 [volume ratio]) was added. Next, the resulting solution was stirred while the separable flask was heated in an oil bath having a temperature of 95°C. Over time, the polymer solution started to show observable, reddish-brown fading derived from bromine. Then, 30 minutes after the temperature inside the separable flask reached 77°C, the polymer solution was dropped into a large amount of methanol for precipitation of the polymer. The polymer precipitated was cleaned with methanol several times, and was then dried for 1 hour in an oven having a temperature of 70°C. This prepared a brominated isoolefin-based polymer. NMR was performed to determine the respective amounts of the methyl group of p-methylstyrene (unreacted) and the bromomethyl group of p-bromomethylstyrene (brominated), the respective amounts indicating that the methyl group of 14% of the p-methylstyrene in the polymer had been brominated.

### (Comparative Example 2)

First, 25 g of the alkylstyrene-containing isoolefin-based polymer produced in Production Example 1 above (containing 300 ppm of titanium) was mixed with 108 g of a mixed solvent of 1-chlorobutane and hexane (9:1 [volume ratio]) in a separable flask, and was dissolved therein at room temperature. The resulting solution was then subjected to nitrogen bubbling for 30 minutes. During the bubbling, when the polymer was entirely dissolved, a portion of the polymer solution was placed in a quartz cell, and the turbidity of the solution was measured. The turbidity was 84. After the bubbling, 2.72 g (17.0 mmol) of bromine was weighed out in a state where the bromine was blocked from light as much as possible, and was added to the polymer solution. Next, the resulting solution was stirred while the separable flask was heated in an oil bath having a temperature of 95°C. After the temperature inside the separable flask reached 77°C, a solution prepared by dissolving 0.204 g of azobisisobutyronitrile (AIBN) in 8.62 g of a mixed solvent of 1-chlorobutane and hexane (9:1 [volume ratio]) was dropped into the solution at a flow rate of 0.16 g/min over 90 minutes. Over time, the polymer solution started to show observable, reddish-brown fading derived from bromine. Then, 210 minutes after the start of dropping AIBN, the polymer solution was dropped into a large amount of methanol for precipitation of the polymer. The polymer precipitated was cleaned with methanol several times, and was then dried for 1 hour in an oven having a temperature of 70°C. This prepared a brominated isoolefin-based polymer. NMR was performed to determine the respective amounts of the methyl group of p-methylstyrene (unreacted) and the bromomethyl group of p-bromomethylstyrene (brominated), the respective amounts indicating that the methyl group of 4% of the p-methylstyrene in the polymer had been brominated.

### (Comparative Example 3)

First, 250 g of the alkylstyrene-containing isoolefin-based polymer produced in Production Example 1 above (containing 300 ppm of titanium) was mixed with 1079 g of a mixed solvent of 1-chlorobutane and hexane (9:1 [volume ratio]) in a separable flask, and was dissolved therein at room temperature. The resulting solution was then subjected to nitrogen bubbling for 30 minutes. During the bubbling, when the polymer was entirely dissolved, a portion of the polymer solution was placed in a quartz cell, and the turbidity of the solution was measured. The turbidity was 84. After the bubbling, 26.4 g (0.166 mmol) of bromine was weighed out in a state where the bromine was blocked from light as much as possible, and was added to the polymer solution. Next, the resulting solution was stirred while the separable flask was heated in an oil bath having a temperature of 95°C. After the temperature inside the separable flask reached 77°C, a solution prepared by dissolving 2.038 g of azobisisobutyronitrile (AIBN) in 86.3 g of a mixed solvent of 1-chlorobutane and hexane (9:1 [volume ratio]) was dropped into the solution at a flow rate of 1.6 g/min over 90 minutes. Over time, the polymer solution started to show observable, reddish-brown fading derived from bromine. Then, 120 minutes after the start of dropping AIBN, the polymer solution was dropped into a large amount of methanol for precipitation of the polymer. The polymer precipitated was cleaned with methanol several times, and was then dried for 1 hour in an oven having a temperature of 70°C. This prepared a brominated isoolefin-based polymer. NMR was performed to determine the respective amounts of the methyl group of p-methylstyrene (unreacted) and the bromomethyl group of p-bromomethylstyrene (brominated), the respective amounts indicating that the methyl group of 7% of the p-methylstyrene in the polymer had been brominated.

### (Comparative Example 4)

First, 100 g of the alkylstyrene-containing isoolefin-based polymer produced in Production Example 1 above (containing 300 ppm of titanium) was dissolved in 500 g of 1-chlorobutane. Next, the solution prepared was mixed with 30 g of Radiolite 900, and the mixture was filtered through a filter having a mesh size of 1 µm. After that, the filtrate was dried at 80°C in a high vacuum for 24 hours. This prepared an alkylstyrene-containing isoolefin-based polymer with turbidness removed. Then, 12 g of the alkylstyrene-containing isoolefin-based polymer with turbidness removed was mixed with 52 g of a mixed solvent of 1-chlorobutane and hexane (9:1 [volume ratio]) in a separable flask, and was dissolved therein at room temperature. The resulting solution was then subjected to nitrogen bubbling for 30 minutes. During the bubbling, when the polymer was entirely dissolved, a portion of the polymer solution was placed in a quartz cell, and the turbidity of the solution was measured. The turbidity was 39. After the bubbling, 1.29 g (8.0 mmol) of bromine was weighed out in a state where the bromine was blocked from light as much as possible, and was added to the polymer solution. Further, a solution prepared by dissolving 0.0160 g of azobisisobutyronitrile (AIBN) in 0.69 g of a mixed solvent of 1-chlorobutane and hexane (9:1 (volume ratio) was added. Next, the resulting solution was stirred while the separable flask was heated in an oil bath having a temperature of 95°C. Over time, the polymer solution started to show observable, reddish-brown fading derived from bromine. Then, 30 minutes after the temperature inside the separable flask reached 77°C, the polymer solution was dropped into a large amount of methanol for precipitation of the polymer. The polymer precipitated was cleaned with methanol several times, and was then dried for 1 hour in an oven having a temperature of 70°C. This prepared a brominated isoolefin-based polymer. NMR was performed to determine the respective amounts of the methyl group of p-methylstyrene (unreacted) and the bromomethyl group of p-bromomethylstyrene (brominated), the respective amounts indicating that the methyl group of 52% of the p-methylstyrene in the polymer had been brominated.

Table 1 shows the results. The term "washing" in Table 1 refers to the step of cleaning the reaction solution with pure water in Production Examples 1 and 2. In Table 1, the turbidity has the unit "H", which means that the turbidity is expressed as a haze value. Further, in Table 1, the term "AIBN added early" means adding AIBN immediately after adding bromine (after which the polymer solution was stirred while being heated), whereas the term "AIBN added dividedly" means adding AIBN after adding bromine and stirring the polymer solution while heating it.

Table 1 shows that in Comparative Examples 1 through 4, in which bromine was excited with use of a radical that formed from AIBN, the brominating reaction rate varied depending on the turbidity arising from titanium oxide. This phenomenon suggests that titanium oxide inhibits a brominating reaction. On the other hand, in each of Examples 1 through 4, in which bromine was excited with use of light, the brominating reaction rate was high regardless of the turbidity arising from titanium oxide. Common knowledge is that since light transmittance decreases with increasing turbidity, the method of exciting bromine by photoreaction will be more likely influenced by turbidity. The discovery by the inventors of the present invention, however, disproves that common knowledge.

**[Table 1]**

| | | Example 1 | Example 2 | Example 3 | Example 4 | Comparative Example 1 | Comparative Example 2 | Comparative Example 3 | Comparativ e Example 4 |
|---|---|---|---|---|---|---|---|---|---|
| Isoolefin-based polymer | | Produced in Production Example 1 | Produced in Production Example 1 | Produced in Production Example 2 | Produced in Production Example 2 | Produced in Production Example 1 | Produced in Production Example 1 | Produced in Production Example 1 | Produced in Production Example 1 |
| Purifying step | | Washing | Washing, filtration | Washing | Washing, filtration | Washing | Washing | Washing | Washing, filtration |
| Ti content in resin | ppm | 300 | No data | 2000 | 35 | 300 | 300 | 300 | No data |
| Turbidity | H | 84 | 25 | 96 | 14 | 84 | 84 | 84 | 39 |
| Bromine excitation source | | Household visible-light LED lamp | Household visible-light LED lamp | 476-nm blue LED lamp | 476-nm blue LED lamp | AIBN added early, heated at 77°C | AIBN added dividedly, heated at 77°C | AIBN added dividedly, heated at 77°C | AIBN added early, heated at 77°C |
| Brominating reaction time | min | 30 | 30 | 120 | 120 | 30 | 210 | 120 | 30 |
| Brominating reaction rate | % | 93 | 95 | 88 | 92 | 14 | 4 | 7 | 52 |
| Weight-average molecular weight (Mw) of halogenated isoolefin-based polymer | | - | 117,000 | 198,000 | 198,000 | - | - | - | - |

Further, Fig. 1 shows how the reaction time and the brominating reaction rate are related to each other in each of Examples 3 and 4. Fig. 1 indicates that in a case where bromine is excited by photoreaction, even a large difference in the turbidity arising from titanium oxide will cause almost no difference in the velocity of the brominating reaction. This suggests that the method of the present invention allows for halogenation of an isoolefin-based polymer without needing too much cost for a step of removing titanium oxide from the polymerization reaction solution.

## Claims

1. A method for producing a halogenated isoolefin-based polymer, the method comprising:
irradiating an alkylstyrene-containing isoolefin-based polymer with light in presence of a halogen molecule, the alkylstyrene-containing isoolefin-based polymer having been polymerized by a living cationic polymerization involving use of titanium chloride as a Lewis acid catalyst,
the alkylstyrene-containing isoolefin-based polymer containing titanium oxide derived from titanium chloride.

2. The method according to claim 1,
wherein
the alkylstyrene-containing isoolefin-based polymer contains not less than 10 ppm of titanium oxide derived from titanium chloride.

3. The method according to claim 1 or 2,
wherein
the titanium chloride is titanium tetrachloride.

4. The method according to any one of claims 1 to 3,
wherein
the alkylstyrene-containing isoolefin-based polymer is a block copolymer of a polymer block containing an isoolefin-based monomer as a main component and a polymer block containing an aromatic vinyl monomer as a main component.

5. The method according to claim 4,
wherein
alkylstyrene contained in the alkylstyrene-containing isoolefin-based polymer is contained in the polymer block containing an isoolefin-based monomer as a main component.

6. The method according to claim 5,
wherein
the alkylstyrene is contained in an amount within a range of 0.1 weight% to 15 weight% with respect to 100 weight% of the polymer block containing an isoolefin-based monomer as a main component.

7. The method according to any one of claims 1 to 6,
wherein
alkylstyrene contained in the alkylstyrene-containing isoolefin-based polymer is a compound represented by General Formula (1) below, 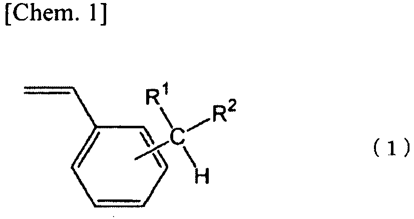 where R¹ and R² are each selected from a hydrogen, a halogen, a monovalent saturated alkyl group having 1 to 5 carbon atoms, and a halogenated alkyl group having 1 to 5 carbon atoms, and R¹ and R² may be identical to or different from each other.

8. The method according to any one of claims 4 to 6,
wherein:
alkylstyrene contained in the alkylstyrene-containing isoolefin-based polymer is p-methylstyrene; and
the aromatic vinyl monomer is styrene.

9. The method according to any one of claims 1 to 8,
wherein
the halogen molecule is a bromine molecule.

10. The method according to any one of claims 1 to 9,
wherein
the halogenated isoolefin-based polymer has a weight-average molecular weight within a range of 50,000 to 500,000.

## Patentansprüche

1. Ein Verfahren zur Herstellung eines halogenierten Polymers auf Isoolefinbasis, wobei das Verfahren umfasst:
Bestrahlung eines alkylstyrolhaltigen Polymers auf Isoolefinbasis mit Licht in Gegenwart eines Halogenmoleküls, wobei das alkylstyrolhaltige Polymer auf Isoolefinbasis durch eine lebende kationische Polymerisation unter Verwendung von Titanchlorid als LewisSäure-Katalysator polymerisiert worden ist,
wobei das alkylstyrolhaltige Polymer auf Isoolefinbasis Titanoxid enthält, das von Titanchlorid abgeleitet ist.

2. Das Verfahren nach Anspruch 1,
wobei
das alkylstyrolhaltige Polymer auf Isoolefinbasis nicht weniger als 10 ppm des Titanoxids enthält, das von Titanchlorid abgeleitet ist.

3. Das Verfahren nach Anspruch 1 oder 2,
wobei
das Titanchlorid Titantetrachlorid ist.

4. Das Verfahren nach einem der Ansprüche 1 bis 3,
wobei
das alkylstyrolhaltige Polymer auf Isoolefinbasis ein Blockcopolymer aus einem Polymerblock, der ein Monomer auf Isoolefinbasis als Hauptkomponente enthält, und einem Polymerblock, der ein aromatisches Vinylmonomer als Hauptkomponente enthält, ist.

5. Das Verfahren nach Anspruch 4,
wobei
das in dem alkylstyrolhaltigen Polymer auf Isoolefinbasis enthaltene Alkylstyrol in dem Polymerblock enthalten ist, der ein Monomer auf Isoolefinbasis als Hauptkomponente enthält.

6. Das Verfahren nach Anspruch 5,
wobei
das Alkylstyrol in einer Menge innerhalb eines Bereichs von 0,1 Gew.-% bis 15 Gew.-% enthalten ist, bezogen auf 100 Gew.-% des Polymerblocks, der ein Monomer auf Isoolefinbasis als Hauptkomponente enthält.

7. Das Verfahren nach einem der Ansprüche 1 bis 6,
wobei
das in dem alkylstyrolhaltigen Polymer auf Isoolefinbasis enthaltene Alkylstyrol eine durch die nachstehende allgemeine Formel (1) dargestellte Verbindung ist, 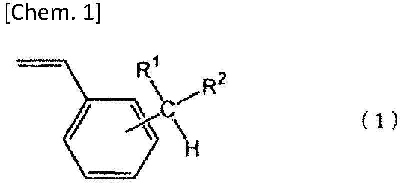 worin R¹ und R² jeweils ausgewählt sind aus einem Wasserstoff, einem Halogen, einer einwertigen gesättigten Alkylgruppe mit 1 bis 5 Kohlenstoffatomen und einer halogenierten Alkylgruppe mit 1 bis 5 Kohlenstoffatomen, und R¹ und R² identisch oder verschieden voneinander sein können.

8. Das Verfahren nach einem der Ansprüche 4 bis 6,
wobei:
das in dem alkylstyrolhaltigen Polymer auf Isoolefinbasis enthaltene Alkylstyrol p-Methylstyrol ist; und
das aromatische Vinylmonomer Styrol ist.

9. Das Verfahren nach einem der Ansprüche 1 bis 8,
wobei
das Halogenmolekül ein Brommolekül ist.

10. Das Verfahren nach einem der Ansprüche 1 bis 9,
wobei
das halogenierte Polymer auf Isoolefinbasis ein gewichtsmittleres Molekulargewicht innerhalb eines Bereichs von 50.000 bis 500.000 aufweist.

## Revendications

1. Méthode pour produire un polymère à base d'isooléfine halogéné, la méthode comprenant : l'irradiation d'un polymère à base d'isooléfine contenant un alkylstyrène avec une lumière en présence d'une molécule d'halogène, le polymère à base d'isooléfine contenant un alkylstyrène ayant été polymérisé par une polymérisation cationique vivante mettant en jeu l'utilisation de chlorure de titane en tant que catalyseur acide de Lewis,
le polymère à base d'isooléfine contenant un alkylstyrène contenant de l'oxyde de titane dérivé de chlorure de titane.

2. Méthode selon la revendication 1,
dans laquelle
le polymère à base d'isooléfine contenant un alkylstyrène contient au moins 10 ppm d'oxyde de titane dérivé de chlorure de titane.

3. Méthode selon la revendication 1 ou 2,
dans laquelle
le chlorure de titane est le tétrachlorure de titane.

4. Méthode selon l'une quelconque des revendications 1 à 3,
dans laquelle
le polymère à base d'isooléfine contenant un alkylstyrène est un copolymère séquencé d'un bloc polymère contenant un monomère à base d'isooléfine en tant que composant principal et un bloc polymère contenant un monomère vinylaromatique en tant que composant principal.

5. Méthode selon la revendication 4,
dans laquelle
l'alkylstyrène contenu dans le polymère à base d'isooléfine contenant un alkylstyrène est contenu dans le bloc polymère contenant un monomère à base d'isooléfine en tant que composant principal.

6. Méthode selon la revendication 5,
dans laquelle
l'alkylstyrène est contenu en une quantité située dans la plage allant de 0,1% en poids à 15 % en poids pour 100 % en poids du bloc polymère contenant un monomère à base d'isooléfine en tant que composant principal.

7. Méthode selon l'une quelconque des revendications 1 à 6,
dans laquelle
l'alkylstyrène contenu dans le polymère à base d'isooléfine contenant un alkylstyrène est un composé représenté par la formule générale (1) ci-dessous, 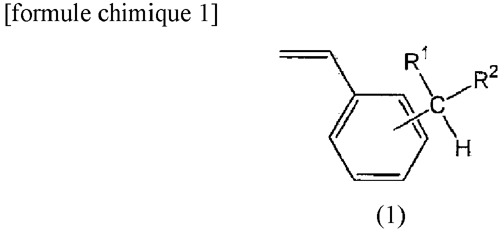 dans laquelle chacun de R¹ et R² est choisi parmi un hydrogène, un halogène, un groupe alkyle saturé monovalent ayant 1 à 5 atomes de carbone, et un groupe alkyle halogéné ayant 1 à 5 atomes de carbone, et R¹ et R² peuvent être identiques ou différents.

8. Méthode selon l'une quelconque des revendications 4 à 6,
dans laquelle
l'alkylstyrène contenu dans le polymère à base d'isooléfine contenant un alkylstyrène est le p-méthylstyrène ; et le monomère vinylaromatique est le styrène.

9. Méthode selon l'une quelconque des revendications 1 à 8,
dans laquelle
la molécule d'halogène est une molécule de brome.

10. Méthode selon l'une quelconque des revendications 1 à 9,
dans laquelle
le polymère à base d'isooléfine halogéné a une masse moléculaire moyenne en masse située dans la plage allant de 50 000 à 500 000.
